Europäisches Patentamt

(19) European Patent Office

Office européen des brevets

(11) Numéro de publication: **0 271 370**
**B1**

# FASCICULE DE BREVET EUROPEEN

(45) Date de publication du fascicule du brevet:
06.06.90

(51) Int. Cl.⁵: **B64G 1/58,** B64G 1/00

(21) Numéro de dépôt: **87402281.7**

(22) Date de dépôt: **13.10.87**

(54) **Dispositif pare-soleil pour satellite géostationnaire.**

(30) Priorité: **16.10.86 FR 8614377**

(43) Date de publication de la demande:
**15.06.88 Bulletin 88/24**

(45) Mention de la délivrance du brevet:
**06.06.90 Bulletin 90/23**

(84) Etats contractants désignés:
**AT BE CH DE ES FR GB GR IT LI LU NL SE**

(56) Documents cités:
**EP-A- 0 132 768**
**US-A- 3 603 530**

**AVIATION WEEK & SPACE TECHNOLOGY,**
**vol. 117, no. 24, 13 décembre 1982, pages 68-69, New**
**York, US: "ESA nearing science mission decision"**
**IDEM**
**ESA BULLETIN, no. 49, février 1987, page 45: "ISO"**

(73) Titulaire: **CENTRE NATIONAL D'ETUDES SPATIALES, 2,**
**Place Maurice Quentin, F-75001 Paris(FR)**

(72) Inventeur: **Dupuis, Yves, Montgaillard-Lauragais,**
**F-31290 Villefranche de Lauragais(FR)**

(74) Mandataire: **Mongrédien, André et al, c/o**
**BREVATOME 25, rue de Ponthieu, F-75008 Paris(FR)**

## Description

La présente invention concerne un dispositif pare-soleil utilisable pour les satellites géostationnaires dont l'orientation par rapport au soleil varie de façon régulière et continue au cours de la journée.

Un problème qui se pose en effet pour ces satellites est le refroidissement continu des capteurs infrarouges utilisés pour l'observation de la surface terrestre. Une méthode utilisée à cette fin consiste à relier les différents capteurs à un radiateur qui évacue de façon continue la chaleur de manière à abaisser notablement leur température. On est donc en présence d'un système passif fonctionnant sans entretien, ce qui est évidemment particulièrement intéressant sur un satellite qui possède des ressources d'énergie limitées et dont la durée de vie peut être longue. Pour être efficace, le radiateur doit être disposé de manière à ne jamais être frappé par le rayonnement solaire ; pour cette raison, on a déjà disposé des radiateurs sur des surfaces dont la normale est orientée de façon orthogonale au plan de l'équateur terrestre, vers le nord ou vers le sud (on parlera donc d'orientation polaire dans le texte). Cette disposition demande toutefois à être améliorée, car au cours de l'année la position relative du soleil par rapport au plan de l'équateur terrestre varie et il est difficile d'éviter que le radiateur soit atteint au moment d'un des solstices.

La présente invention permet de remédier à cet inconvénient à l'aide d'un dispositif pare-soleil orientable de manière continue en fonction de la position du soleil par rapport au satellite et de dimensions suffisamment réduites pour ne pas diminuer trop fortement l'angle solide délimitant le ciel du radiateur. On maintient ainsi une surface noire suffisamment importante tout en se prémunissant contre les apports d'énergie parasites.

Un écran pare-soleil de forme évasée et de hauteur variable est celui du satellite ISO, représenté en particulier à la page 68 et 69 du journal "Aviation Week & Space Technology", vol. 117, no. 24, 13.12.82.

La demande EP-A1-0 132 768 montre par ailleurs un dispositif pare-soleil pour satellite géostationnaire mû pour accomplir un tour complet autour du satellite en vingt-quatre heures et suivre ainsi le soleil selon les caractéristiques du préambule de la revendication 1.

L'invention a pour objet un dispositif paresoleil qui permette un meilleur refroidissement de la zone à protéger en facilitant le rayaonnement de chaleur à partir de cette zone.

Elle concerne donc un dispositif pare-soleil pour satellite géostationnaire, comprenant une couronne disposée autour d'une zone d'orientation polaire à protéger du rayonnement solaire, des moyens de positionnement de la couronne permettant la rotation de celle-ci autour d'un axe du satellite orthogonal au plan de l'équateur terrestre, des moyens de mise en rotation de la couronne, et un écran réfléchissant le rayonnement solaire, fixé sur la couronne et s'étendant sur un secteur angulaire de la couronne, caractérisé en ce que l'écran s'évase en s'éloignant de la couronne et présente une hauteur variable le long de sa circonférence et que le contour supérieur de l'écran est pourvu d'une collerette sensiblement plane et située à l'extérieur du contour. L'effet de refroidissement peut être renforcé si la collerette comprend un revêtement réfléchissant du côté exposé au soleil et un revêtement dissipant la chaleur du côté opposé.

Selon un mode de réalisation possible de l'invention, les moyens de mise en rotation de la couronne comprennent un moteur pas à pas muni d'une roue dentée qui s'engrène avec une denture correspondante de la couronne.

Les surfaces réfléchissantes de la lumière solaire comprennent une plaque d'aluminium poli et, à l'extérieur de celle-ci, une couche de matériau assurant l'isolation thermique et la réflexion de la lumière solaire.

On va à présent décrire l'invention de façon plus concrète et précise à l'aide des commentaires des dessins donnés en annexe, parmi lesquels:

- la figure 1 représente la configuration générale d'un satellite géostationnaire par rapport à la terre et au soleil ;
- la figure 2 représente en perspective un satellite géostationnaire équipé de l'invention ;
- la figure 3 représente un détail de l'invention ; et
- la figure 4 représente schématiquement une variante de réalisation d'un écran conforme à l'invention.

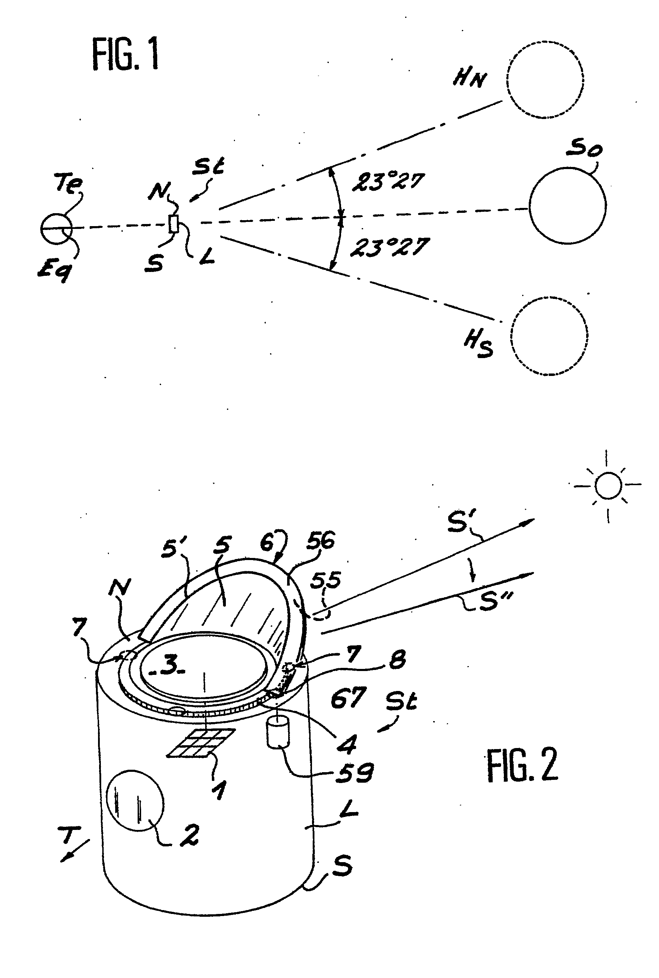

La figure 1 représente essentiellement la terre Te, le satellite géostationnaire St et le soleil So. Le lieu du satellite géostationnaire est un cercle appartenant au plan de l'équateur terrestre Eq et distant de 35 800 km de la surface de la terre Te ; il parcourt par définition ce cercle en vingt-quatre heures et le dessin le représente dans la position où il est aligné avec la terre Te et le soleil So et entre eux. Le satellite St présente donc généralement une surface latérale L dont les points sont balayés toutes les vingt-quatre heures par le rayonnement solaire et deux surfaces extrêmes N et S parallèles au plan de l'équateur terrestre Eq et non exposées au soleil So. C'est sur ces surfaces N et S qu'il serait avantageux de placer des radiateurs destinés à disperser la chaleur des capteurs infrarouges du satellite St. Mais l'idée perd de son intérêt quand la surface sur laquelle est disposé le radiateur correspond à l'hémisphère terrestre où règne l'été : le rayonnement solaire vient alors éclairer cette surface N ou S et, même si les rayons arrivent avec une incidence très oblique, le fonctionnement du radiateur n'en est pas moins perturbé.

La figure 1 résume cet état de fait en indiquant, dans un repère lié à la terre Te et au satellite St, le trajet des rayons solaires Hn et Hs au moment des solstices de juin et de décembre.

La figure 2 représente le satellite St qui est muni d'une batterie de capteurs 1, par exemple des capteurs à infrarouges utilisés pour les observations météorologiques et situés dans le plan focal d'un instrument 2 pointé vers la terre. La chaleur que ces capteurs emmagasinent est transmise vers un radiateur 3 qui consiste principalement en une surface placée à proximité de la face nord N (ou sud S) du satellite St et rayonnant donc vers l'espace.

On a représenté la direction de la terre par l'axe T et la direction du soleil par l'axe S' ; la projection de cet axe S' dans le plan de l'équateur terrestre, perpendiculaire à l'orientation polaire, est l'axe S".

Un écran pare-soleil 5 est orienté dans la direction S" et tourné continûment en fonction de l'angle que font les axes S et T. Un écran pare-soleil fixe enveloppant entièrement le radiateur 3 aurait en effet trop fortement réduit l'angle solide par lequel le radiateur 3 dissipe la chaleur qu'il reçoit. Il est au contraire souhaitable que l'étendue de l'écran pare-soleil 5 soit aussi réduite que possible.

L'écran pare-soleil 5 est, selon une réalisation préférée de l'invention, en forme de portion de cylindre oblique ou de tronc de cône ayant une couronne 4 pourvue d'une circonférence dentée 17 pour base et dont le contour supérieur 5' est sur un plan sécant au plan de cette couronne 4. L'écran pare-soleil 5 a donc une hauteur variable, plus importante dans la partie centrale plus spécialement exposée au soleil et s'amenuisant vers les extrémités. On obtient finalement une forme qui s'évase en s'éloignant de la couronne 4 et occulte beaucoup moins le ciel du radiateur 3 que ne le ferait un écran en demi-cylindre droit.

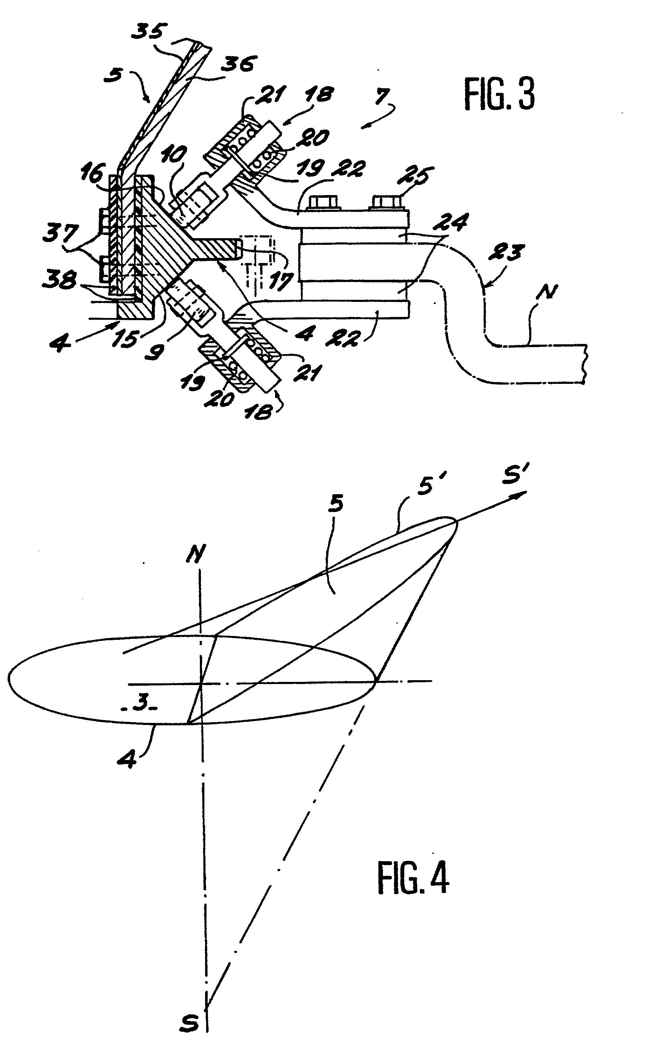

Dans une réalisation possible, on peut employer un écran s'étendant angulairement sur 180°, construit sur un cylindre oblique de 30° par rapport à l'orientation polaire ou un cône de demi-angle d'ouverture 30°, et de hauteur maximale (en projection orthogonale à l'orientation polaire) de 100 mm pour un radiateur de 250 mm de diamètre. Cette forme est représentée figure 4.

L'écran pare-soleil 5 est en outre pourvu sur son contour supérieur 5' d'une collerette 6 s'étendant vers l'extérieur de l'écran 5 et appartenant par exemple au plan délimitant le contour supérieur 5' de l'écran pare-soleil 5 et située à l'extérieur de ce contour 5'. La collerette 6 comprend essentiellement un revêtement réfléchissant 55 du côté exposé au Soleil So et un revêtement dissipant la chaleur 56 du côté opposé.

L'invention comprend en outre des moyens de maintien en position de la couronne 4 sur la face nord N (ou sud S) du satellite St tout en permettant la rotation de celle-ci, ainsi que des moyens d'assurer cette rotation. Ces moyens portent respectivement les références 7 et 67 sur la figure 2 ; ils sont décrits plus en détail ci-dessous. La figure 3 représente en coupe l'écran pare-soleil 5 qui est composé de deux parties : une plaque d'aluminium poli 35 mince qui assure la rigidité de l'écran 5 et une couche 36 assurant l'isolation thermique et dont la face exposée au soleil est choisie dans un matériau réfléchissant. L'écran pare-soleil 5 est relié à la couronne 4, que l'on voit également en coupe, au moyen d'un ensemble composé de boulons 37 en titane et de rondelles 38 disposées entre la couronne 4 et l'écran 5, ainsi qu'entre les têtes des boulons 37 et l'écran 5, et dont la fonction principale est d'assurer une isolation thermique.

La couronne 4 est dentée en 17 sur sa circonférence extérieure et pourvue en outre de deux chemins de roulement 15 et 16 obliques sur lesquels viennent rouler respectivement, en trois emplacements espacés angulairement de 120°, deux rouleaux 9 et 10. L'axe de chacun de ces rouleaux 9 et 10 est enserré dans les branches d'une fourche 18 apte à coulisser dans des boîtiers 21 servant d'abris à des ressorts 20 qui pressent les fourches 18 vers l'intérieur de la couronne 4 en s'appuyant sur des rondelles 19 fixées aux fourches 18. Les boîtiers 21 sont fixés à des bâtis 22 eux-mêmes assujettis à un étrier 23 du satellite St à l'aide d'autres boulons de titane 25 et des rondelles 24.

Ce dispositif permet donc d'exercer un effort sur la couronne 4 dont la composante radiale est orientée vers l'intérieur et dont les composantes verticales sont de sens opposés et de module égal pour les deux roues 9 et 10. Il en résulte donc un équilibrage parfait sur les trois ensembles 7.

Il reste maintenant à décrire la façon dont on réalise la rotation de la couronne 4. Il est clair que cette rotation doit être continue ou du moins exécutée à des intervalles assez rapprochés et avec des pas faibles pour tenir compte de la variation continuelle d'orientation du soleil So ; de plus, le réglage de la vitesse de rotation doit être parfait, de manière à garantir une bonne orientation de l'écran pare-soleil 5 pour toute la durée de vie du satellite géostationnaire.

Un moteur pas à pas 59 muni d'un engrenage 8 entraîne directement la couronne 4. Les impulsions de commande de ce moteur sont pilotées par l'horloge de bord du satellite dont la stabilité, même pour une durée de vie de 10 ans, garantit une précision suffisante.

On voit que ce système pare-soleil de construction fiable est assez simple ; les efforts mécaniques mis en jeu sont faibles et permettent donc de dimensionner légèrement le matériel objet de l'invention.

On se trouve donc en présence d'un système intéressant pour accroître l'efficacité de l'évacuation de la chaleur dissipée par les capteurs infrarouges des satellites géostationnaires, ce qui est susceptible d'améliorer grandement la précision de leurs mesures.

## Revendications

1. Dispositif pare-soleil pour satellite géostationnaire, comprenant une couronne (4) disposée autour d'une zone d'orientation polaire (3) à protéger du rayonnement solaire, des moyens de positionnement (7) de la couronne permettant la rotation de celle-ci autour d'un axe du satellite (St) orthogonal au plan de l'équateur terrestre (Eq), des moyens de mise en rotation de la couronne (4), et un écran (5) réfléchissant le rayonnement solaire, fixé sur la couronne et s'étendant sur un secteur angulaire de la couronne, caractérisé en ce que l'écran s'évase en s'éloignant de la couronne et présente une hauteur variable le long de sa circonférence, et que le contour supérieur (5') de l'écran est pourvu d'un collerette (6) sensiblement plane et située à l'extérieur du contour.

2. Dispositif pare-soleil pour satellite géostationnaire suivant la revendication 1, caractérisé en ce que la collerette (6) comprend un revêtement réfléchissant (55) du côté exposé au soleil (So) et un revêtement dissipant la chaleur (56) du côté opposé.

3. Dispositif pare-soleil pour satellite géostationnaire suivant l'une quelconque des revendications 1 ou 2, caractérisé en ce que l'écran (5) est sensiblement en forme de paroi de cylindre oblique par rapport à l'orientation polaire ou de tronc de cône ayant la couronne (4) pour base, et en ce que son contour supérieur (5`) est délimité par un plan sécant avec le plan de la couronne.

4. Dispositif pare-soleil pour satellite géostationnaire suivant l'une quelconque des revendications 1 à 3, caractérisé en ce que l'écran (5) réfléchissant la lumière solaire comprend une plaque d'aluminium poli (35) et, à l'extérieur de celle-ci, une couche de matériau (36) assurant l'isolation thermique et la réflexion du rayonnement solaire.

5. Dispositif pare-soleil pour satellite géostationnaire suivant la revendication 1, caractérisé en ce que les moyens de positionnement (7) comprennent, en trois zones régulièrement réparties de la couronne (4), deux rouleaux (9, 10) d'axes sécants avec l'axe de rotation de la couronne (4);

— plaqués sur des surfaces de roulement différentes (15, 16) de la couronne (4) à l'aide de dispositifs à ressort (18 à 22),

— exerçant sur la couronne (4) des efforts radiaux de même sens et des efforts verticaux de sens opposés.

6. Dispositif pare-soleil pour satellite géostationnaire suivant la revendication 1, caractérisé en ce que la couronne (4) comprend une circonférence dentée (17) et que les moyens de mise en rotation de la couronne (4) comprennent un moteur (59) pas à pas terminé par une roue (8) dentée qui s'engrène avec la couronne (4).

7. Dispositif pare-soleil suivant l'une quelconque des revendications 1 à 6, caractérisé en ce que le secteur angulaire sur lequel s'étend l'écran (5) est proche de 180°.

8. Dispositif pare-soleil pour satellite géostationnaire suivant l'une quelconque des revendications 1 à 7, caractérisé en ce que l'écran présente des extrémités de hauteur à peu près nulle.

## Claims

1. Sun protection device for a geostationary satellite, comprising a crown (4) disposed around a polar orientation zone (3) to be protected from the solar radiation, means (7) for positioning the crown, permitting the rotation of the latter about an axis of the satellite (St) orthogonal to the plane of the terrestrial equator (Eq), means for setting the crown (4) in rotation, and a screen (5) reflecting the solar radiation, fixed on the crown, and extending over an angular sector of the crown, characterized in that the screen widens out in proceeding away from the crown and exhibits a variable height along its circumference, and in that the upper contour (5') of the screen is provided with a collar (6) which is substantially plane and situated outside the contour.

2. Sun protection device for a geostationary satellite according to Claim 1, characterized in that the collar (6) comprises a reflecting covering (55) on the side exposed to the Sun (So) and a covering dissipating the heat (56) on the opposite side.

3. Sun protection device for a geostationary satellite according to either one of Claims 1 or 2, characterized in that the screen (5) is substantially in the form of a cylinder wall which is oblique in relation to the polar orientation or of a frustum of a cone having the crown (4) for base, and in that its upper contour (5') is delimited by a plane intersecting the plane of the crown.

4. Sun protection device for a geostationary satellite according to any one of Claims 1 to 3, characterized in that the screen (5) reflecting the solar light comprises a plate of polished aluminium (35) and, outside the latter, a layer of material (36) ensuring the thermal insulation and the reflection of the solar radiation.

5. Sun protection device for a geostationary satellite according to Claim 1, characterized in that the positioning means (7) comprise, in three regularly distributed zones of the crown (4), two rollers (9, 10) of axes intersecting the axis of rotation of the crown (4);

— which are pressed on different rolling surfaces (15, 16) of the crown (4) by means of spring devices (18 to 22),

— exerting on the crown (4) radial forces of the same direction and vertical forces of opposite directions.

6. Sun protection device for a geostationary satellite according to Claim 1, characterized in that the crown (4) comprises a toothed circumference (17) and in that the means for placing the crown (4) in rotation comprise a stepping motor (59) terminated by a toothed wheel (8) which engages with the crown (4).

7. Sun protection device according to any one of Claims 1 to 6, characterized in that the angular sector over which the screen (5) extends is close to 180°.

8. Sun protection device for a geostationary satellite according to any one of Claims 1 to 7, characterized in that the screen exhibits ends of approximately zero height.

## Patentansprüche

1. Vorrichtung gegen Sonnenstrahlen für einen geostationären Satelliten mit: einer Krone (4), die um einen Bereich mit polarer Orientierung (3) zum Schutz vor Sonnenstrahlung angeordnet ist, einer Positioniervorrichtung (7) für die Krone, die die Drehung dieser um eine Satellitenachse (St) senkrecht zur irdischen Äquatorebene (Eq) ermöglicht, einer Vorrichtung, um die Krone (4) in Rotation zu versetzen und einem die Sonnenstrahlung reflektierenden Schirm (5), der auf der Krone befestigt ist und sich über einen Winkelbereich der Krone erstreckt, dadurch gekennzeichnet, daß sich der Schirm ausdehnt, indem er sich von der Krone entfernt und eine variable Höhe entlang ihres Umfanges aufweist, und daß die obere Außenlinie (5') des Schirms mit einem Kragen (6) versehen ist, der im wesentlichen eben ist und sich außerhalb der Außenlinie befindet.

2. Vorrichtung gegen Sonnenstrahlen für einen geostationären Satelliten nach Anspruch 1, dadurch gekennzeichnet, daß der Kragen (6) einen reflektierenden Überzug (55) auf der der Sonne ausgesetzten Seite (So) und einen Wärme dissipierenden Überzug (56) auf der gegenüberliegenden Seite aufweist.

3. Vorrichtung gegen Sonnenstrahlen für einen geostationären Satelliten nach einem der Ansprüche 1 oder 2, dadurch gekennzeichnet, daß der Schirm (5) im wesentlichen die Form einer Wand eines schiefen Zylinders bezüglich der polaren Orientierung oder eines Kegelstumpfes mit der Krone (4) als Basis besitzt und daß seine obere Außenlinie (5') von einer Ebene begrenzt wird, die sich mit der Kronenebene schneidet.

4. Vorrichtung gegen Sonnenstrahlen für einen geostationären Satelliten nach einem der Ansprüche 1 bis 3, dadurch gekennzeichnet, daß der das Sonnenlicht reflektierende Schirm (5) eine polierte Aluminiumplatte (35) und außerhalb dieser eine Schicht aus einem Material (36) aufweist, das die thermische Isolation und die Reflexion der Sonnenstrahlung sicherstellt.

5. Vorrichtung gegen Sonnenstrahlen für einen geostationären Satelliten nach Anspruch 1, dadurch gekennzeichnet, daß die Positioniervorrichtung (7) in drei regelmäßig aufgeteilten Bereichen der Krone (4) zwei Rollen (9, 10) aufweist, deren Achsen sich mit der Rotationsachse der Krone (4) schneiden,
   – die auf verschiedenen Rolloberflächen (15, 16) der Krone mittels Federvorrichtungen (18 bis 22) aufgebracht sind,
   – die auf die Krone radiale Kräfte in der gleichen Richtung und vertikale Kräfte in entgegengesetzten Richtungen ausüben.

6. Vorrichtung gegen Sonnenstrahlen für einen geostationären Satelliten nach Anspruch 1, dadurch gekennzeichnet, daß die Krone (4) einen gezahnten (17) Umfang aufweist und daß die Vorrichtung zum Ingangsetzen der Rotation der Krone (4) einen Schrittmotor (59) aufweist, der mit einem Zahnrad (8) abgeschlossen ist, das in die Krone (4) greift.

7. Vorrichtung gegen Sonnenstrahlen für einen geostationären Satelliten nach einem der Ansprüche 1 bis 6, dadurch gekennzeichnet, daß der Winkelbereich, über den sich der Schirm (5) erstreckt, nahe 180° ist.

8. Vorrichtung gegen Sonnenstrahlen für einen geostationären Satelliten nach einem der Ansprüche 1 bis 7, dadurch gekennzeichnet, daß der Schirm Enden von einer Höhe von fast Null aufweist.

# FIG. 1

Te
Eq
N
St
S
L
23°27
23°27
HN
So
HS

# FIG. 2

5'  5  6  56
N  55
7  S'
S"
3  7  8
67  St
4
1  59
2  L
T  S

EP 0 271 370 B1

FIG. 3

FIG. 4